# EUROPEAN PATENT APPLICATION

(11) **EP 4 737 745 A1**
(43) Date of publication of application: **06.05.2026**
(21) Application number: 25212526.5
(22) Date of filing: 30.10.2025
(51) Int. Cl.: F16B 5/06

(54) **HYBRID CLIP**

(30) Priority: 04.11.2024 US 202463716233 P; 29.10.2025 US 202519372270
(71) Applicant: Termax Company, Lake Zurich, IL 60047 (US)
(72) Inventor: DICKINSON, Daniel James, Lake Zurich, Illinois, 60069 (US)
(74) Representative: Weinstein Services & Conseils

(57) **Abstract**

A hybrid plastic carrier and metal fastener clip includes a base plate; a pair of legs extending from the base plate; a locking tab formed on the leg; at least one wing extending from the leg comprising: an engagement region on the wing; and snap knuckles. The legs bend away from each other to form a head portion and a lead in section. A locking tab is formed on the second leg. A pair of opposing wing tips at ends of the first and second wings are operable to engage a chassis slot. A plastic carrier has an opening for inserting the base plate. A pair of opposing carrier walls formed on a top end of the carrier bend as the opposing locking tabs slide past the carrier walls; and a pair of opposing locking slots to engage the opposing locking tabs.

## Description

### FIELD OF THE INVENTION

The invention relates generally to devices for fastening objects, and more particularly to a fastener clip for insertion into an engagement structure, such as a vehicle chassis, a hollow substrate, a wall, a building structure, a plate or any suitable surface.

### BACKGROUND OF THE INVENTION

A number of devices and fasteners are currently available for fastening panels, automobile interior trim piece panels, and body panels to the chassis of a vehicle. As used herein, a body panel refers to, for example, any interior or exterior body panel on a vehicle, a plastic interior trim piece, headliner or any interior trim piece. Additionally, the panel may be any suitable exterior body panel, such as a fender, bumper, cover piece, quarter panel or door panel. The chassis of the vehicle may include any substrate, plate, body panel, structural framework, chassis component or subcomponent, wall or any suitable structure.

These body panels typically are required to attach to the chassis of an automobile with a relatively low level of insertion force while providing a high level of extraction force suitable to maintain attachment of the panel to the chassis. However, these conventional fastener devices instead provide approximately relatively equal levels of insertion and extraction force or high insertion and low retention force. Further, conventional fasteners typically do not adequately secure the panel to the vehicle chassis having sheet metal with different curvature or thicknesses throughout the chassis and fastener. Also, conventional fasteners are not suitable under a variety of environmental conditions, such as in the presence of vibration at various levels of amplitude and frequency. For example, the fastener device should prevent or minimize the amount of buzzing, rattling or any other type of noise that may cause attention to the occupants of the vehicle or otherwise weaken the attachment. Also, conventional fasteners do not adequately accommodate various levels of production tolerances, such as various dimensions amongst, for example, the body panels fasteners as well as the vehicle chassis. Thus, conventional fastener devices typically do not adequately fasten to a range of sheet metal thicknesses and do not minimize or eliminate buzzing and rattling and do not sufficiently accommodate variations in production tolerances.

Fastener clips, such as metal spring fasteners, are known for attaching body panels to an automobile chassis. For example, fastener clips are known having a base plate and four stepped arms extending from the base plate. Each stepped arm includes four incremental steps (stair-steps) suitable for engaging a slot in a vehicle chassis with one of the steps on each arm. The incremental steps allow for engagement, however, in only one of the four discrete step positions rather than over a continuous range of engagement positions. Further, each step has a relatively large rise and run so that, once inserted, movement of the fastener clip within the range of a step size may occur, resulting in wear and/or the generation of noise, including buzzing and rattling as a result of vibrations occurring within the vehicle. Also, the steps typically cut onto each arm during manufacture and also require twisting of each wing on the fastener clip in order to engage the slot in the vehicle chassis. As a result, only an edge or a portion of an edge of each of the steps engages the hole in the vehicle slot.

If the sheet metal varies in thickness or if tolerances in production of the slot in the vehicle chassis or in the trim-piece vary, for example, then engagement of one portion of the hole in the chassis with one of the arms may not provide suitable frictional engagement or otherwise result in movement. Further, less than all four of the arms will make engagement with the slot of the vehicle chassis. Twisting of the body panel will be likely more prevalent because less than four contact points are actually made with the slot of the vehicle chassis. As a result, wear, squeaks, rattles, buzzing, corrosion and loss of elasticity and loss of sealing may result, especially after years of vehicle operation and exposure to vibration and other environmental conditions.

### BRIEF DESCRIPTION OF THE DRAWINGS

Fig. 1 is an exploded view of a fastener clip according to one embodiment;
Fig. 2 is an exploded side view of the fastener clip according to another embodiment;
Fig. 3 is a perspective view of a body panel assembly according to one embodiment;
Fig. 4 is a perspective view of a fastener clip according to one embodiment;
Fig. 5 is another side view of the fastener clip;
Fig. 6 is another side view of the fastener clip shown in Fig. 5 rotated 90 degrees axially;
Fig. 7 is a perspective view of a body panel assembly in accordance with another embodiment;
Fig. 8 is a perspective view of a body panel assembly in a chassis in accordance with another embodiment;
Fig. 9 is a cut away view of a body panel assembly at different stages of engagement in a chassis in accordance with an exemplary embodiment;
Fig. 10 is another cut away view of a body panel assembly;
Fig.11 is a top view of a body panel assembly according to one embodiment;
Fig. 12 is a side view of the body panel assembly; and
Fig. 13 is a side view of the fastener clip affixed to a chassis as shown in Fig. 12 rotated 90 degrees in accordance with an exemplary embodiment.

### SUMMARY

A hybrid plastic carrier and metal fastener clip "fastener clip" includes a base plate; a pair of legs extending from the base plate; a locking tab formed on the leg; and at least one wing extending from the leg comprising: an engagement region on the wing; and snap knuckles. The legs bend away from each other to form a head portion and a lead-in section. A locking tab is formed on the second leg. A pair of opposing wing tips at ends of the first and second wings are operable to engage a chassis slot. A plastic carrier has an opening for inserting the base plate. A pair of opposing carrier walls formed on a top end of the carrier bend as the opposing locking tabs slide past the carrier walls; and a pair of opposing locking slots engage the opposing locking tabs.

### DETAILED DESCRIPTION OF THE PREFERRED EMBODIMENTS

Among other advantages, the fastener clip has a high level of extraction force yet securely and relatively easily facilitates attachment of a body panel, such as an interior or exterior body panel with the first engagement structure such as the vehicle chassis. The fastener clip is suitable for use in heavy duty applications such as visor mounting, headliners and pull-handle fasteners. The wings have an engagement region and size, such as a width, length, thickness and pivot point to provide very high extraction force levels while the insertion force level is relatively low.

Further, the same fastener clip may be used with different sheet metal thicknesses and curvatures. As such, a vehicle may have different sheet metal thicknesses at various parts of the vehicle and chassis. The range of slot thicknesses varies continuously or discreetly from a minimum thickness to a maximum thickness. For example, the minimum thickness may be 0.25 mm or less and the maximum thickness may be 6.0 mm or more or any suitable thickness. The fastener clip is operative for insertion into the slot defined in a first engagement structure, such as a vehicle chassis. Since the fastener clip adapts automatically to different sheet metal thicknesses and curvatures, the same fastener clip may be used throughout the vehicle with different slot thicknesses, thus eliminating the need for specific fastener clips for specific slot thicknesses.

The engagement portion adapts to variations, curvature or movement of a slot, such as a sheet metal thicknesses, and as variations in the thickness of various portions of the vehicle chassis and variations in body panels to maintain a high level of extraction force relative to the insertion force. For example, during engagement the engagement portion continuously adapts to variations in thickness, curvature and dimensions of the vehicle chassis and/or in the body panel and other variations. Thus, only a single fastener clip can be used with a vehicle or application even if the thickness of the sheet metal varies or if the sheet metal moves or curves. According to one embodiment, each wing independently engages the slot of the vehicle chassis in a continuous rather than discrete manner. Further, each wing adapts to changes, such as chassis flexing and vibrations of a wide range of amplitudes and frequencies, and other conditions.

The engagement portion, along with an optional engagement tab on each wing, permits relatively easy insertion of the fastener clip into a slot formed within the vehicle chassis while providing a relatively high level of extraction force from the vehicle chassis. Assembly of the body panel onto the vehicle chassis requires a relatively low level of insertion force compared to the extraction force, and as a result provides many ergonomic advantages. For example, the relatively low level of insertion force is particularly advantageous for assembly line operators who repetitively insert body panels onto the vehicle chassis. The relatively low level of insertion force required for inserting the body panel into the vehicle chassis may result in fewer injuries to the assembly workers, including injuries related to repetitive stress syndrome. By eliminating conventional screws for fastening to the roof, assembly of the visor and headliner to the roof with the fastener significantly reduces assembly and servicing time and cost. Further by eliminating multiple fasteners for different sheet metal thicknesses, confusion during assembly is eliminated reduced since the same type fastener may be used for all slots. Thus, an assembly worker need not worry about selecting the wrong fastener for different slot thicknesses.

The relatively high level of extraction force, characteristic of the fastener clip, securely attaches the body panel, such as an interior trim piece or headliner, to the vehicle chassis such as a roof. Further, the fastener clip continuously adapts to changes in environmental conditions such as vehicle flexing, vibration and thermal expansion. For example, the fastener clip may adapt to changes in thermal expansion, especially due to the differences in thermal expansion rates between dissimilar metals or metal to plastic with respect to the vehicle chassis components and/or between plastic components such as the interior trim panels attached to the metal vehicle chassis. Yet another advantage is that the fastener clip is relatively easy to manufacture using relatively inexpensive manufacturing processes and materials. The use of the fastener clip decreases production costs, increases worker productivity and efficiency and decreases overall vehicle assembly costs. The fastener clip securely attaches any suitable body panel to the vehicle chassis, such that the fastener clip improves reliability both in the short term and in the long term, while further improving vehicle safety and quality.

The fastener clip dampens vibrations and thus eliminates or substantially reduces buzz, squeak and rattles. The fastener clip continuously adapts to changes in environmental conditions such as vehicle flexing, vibration and thermal expansion. For example, the fastener clip may adapt to changes in thermal expansion, especially due to the differences in thermal expansion rates between dissimilar metals with respect to the vehicle chassis components and/or between plastic components such as the interior trim panels attached to the metal vehicle chassis. The fastener clip may also fasten to plastic and/or metal engagement structures. The fastener clip and carrier 100may be made of anti-corrosive material such as plastic or treated metal to provide long reliable service life.

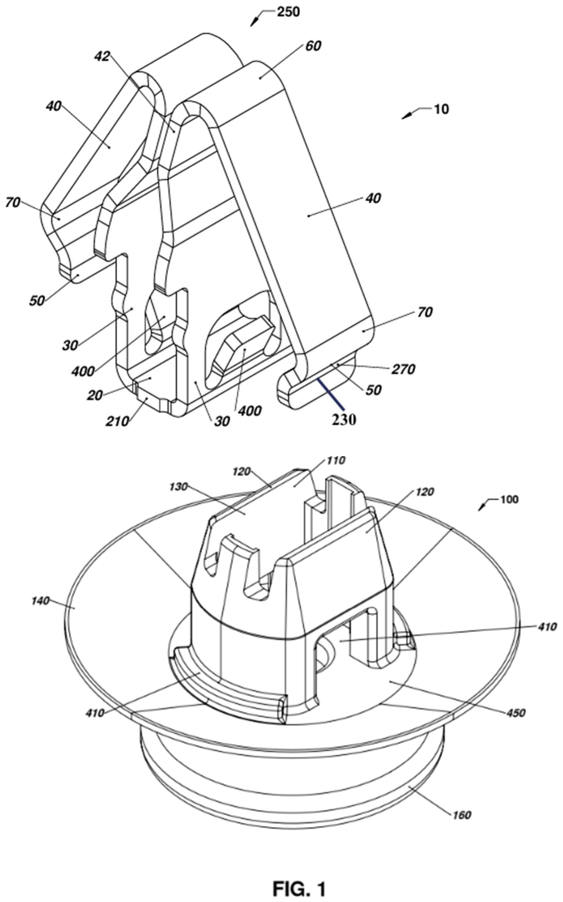

Fig. 1 is a perspective view of a hybrid plastic carrier 100 and metal fastener clip "fastener clip" 10 according to one embodiment. The fastener clip 10 includes a base plate 20 and a first and second pair of laterally offset legs 30 extending from the base plate 20. At least one first wing 40 extends from the first pair of laterally offset legs 30. The at least one first wing 40 has a snap knuckle 70, an engagement region 270 and a wing tip 50. At least one second wing 40 extends from the second pair of laterally offset legs 30. The at least one first wing 40 extends from (are attached to) the first pair of laterally offset legs 30 near the head portion 250 opposite from the base plate 20. Similarly, the at least one second wing 40 extends from (are attached to) the second pair of laterally offset legs 30 near the head portion 250 opposite from the base plate 20.

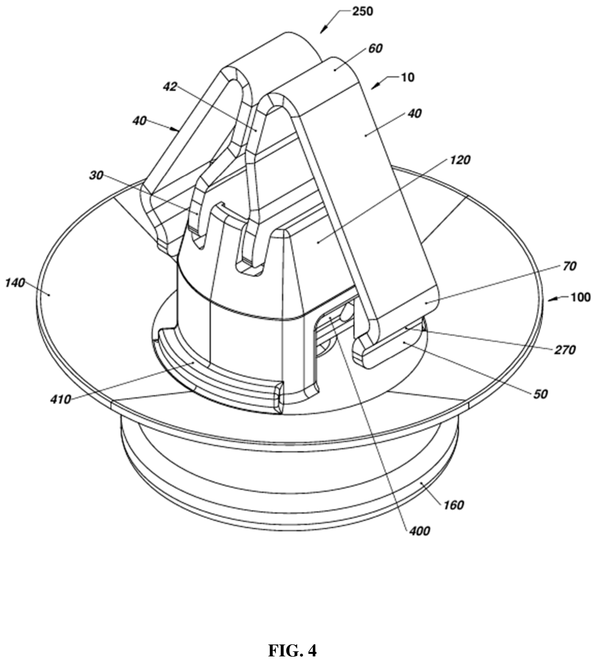

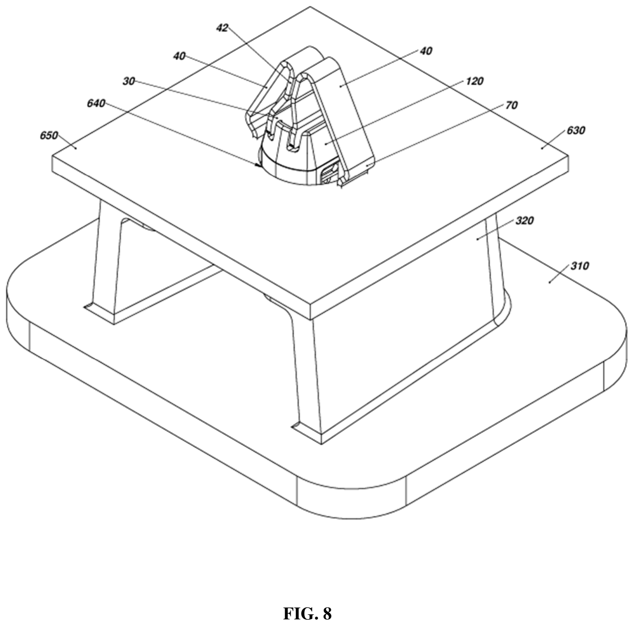

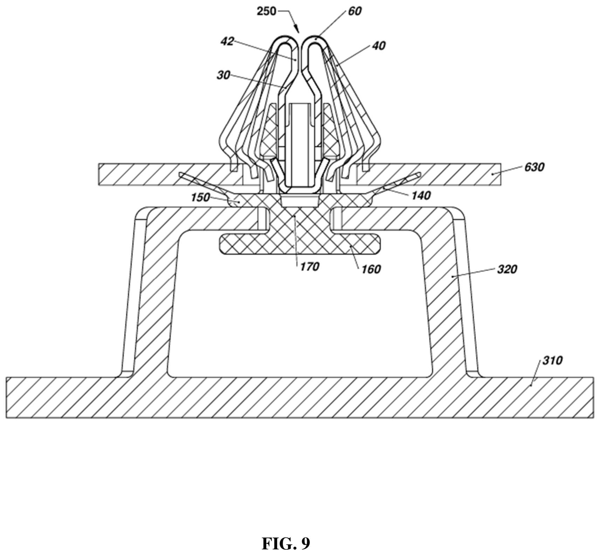

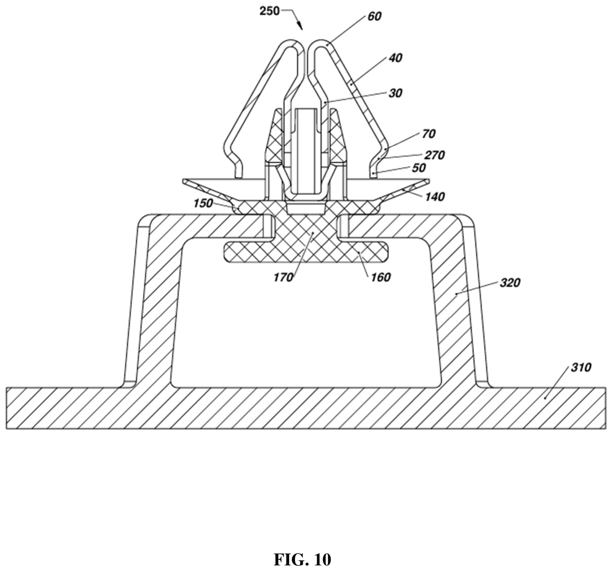

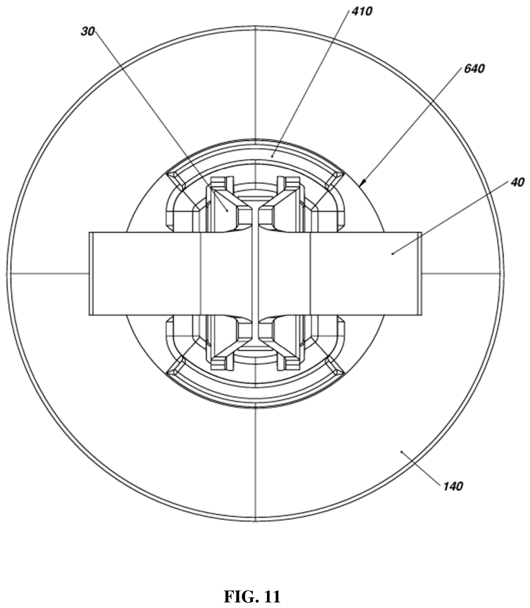

Although reference number 30 refers to both pairs of legs 30 and reference number 40 refers to wings 40 on both pairs of legs 30, it is understood that the at least one first wing 40 corresponds to the first pair of legs 30 and the at least one second wing 40 corresponds to the second pair of legs 30. Although the fastener clip 10 is shown in figs 1- 13 with two legs 30 and two wings 40, any suitable number of legs 30 and wings 40 may be used. For example, four legs 30 and two wings 40 may be used, four legs 30 and four wings 40 may be used, three legs 30, four or more legs 30 and so forth may be used. According to one embodiment, the legs 30 and wings 40 may have any suitable shape, such as for example, at least one of: the legs 30 and the arms, is tapered, straight, curved or any suitable shape.

The wings 40 have a size, such as a width, length, thickness and a support point 42 to provide very high extraction force levels while the insertion force level is relatively very low. For example, the support point 42 may be widened or narrowed by scoring, stamping, bending or cutting, or any suitable means on legs 30 to ensure that the wings 40 spring inward as required so that the insertion force is low relative to the extraction force. Since the wings 40 are in compression during extraction, the narrowed support point 42 does not significantly weaken the extraction force yet the insertion force is reduced. According to another embodiment, the width of the wing 40 may be increased to further increase the strength of the wing 40 and thus increase the extraction force, as well as increase the size of the engagement region. Alternatively, the width of the wings 40 may be decreased, or the wings 40 may have different widths and engagement region(s) 270 to achieve any desired insertion force, extraction force or ratio.

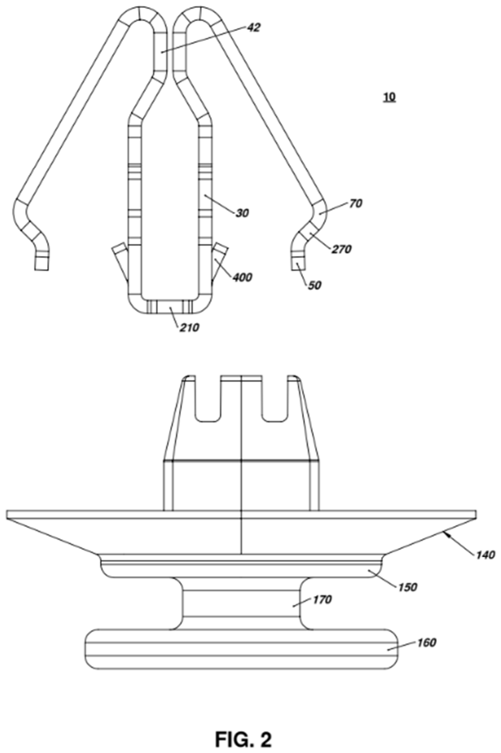

Fig. 2 is an exploded side view of the fastener clip 10 according to another embodiment. Lead in section 60 is on the pair of laterally offset legs 30 at an end opposed the base plate 20. For example, the lead in section 60 may touch or are close together to prevent or reduce movement between the pair of legs 30 and strengthen the fastener clip 10 to improve engagement.

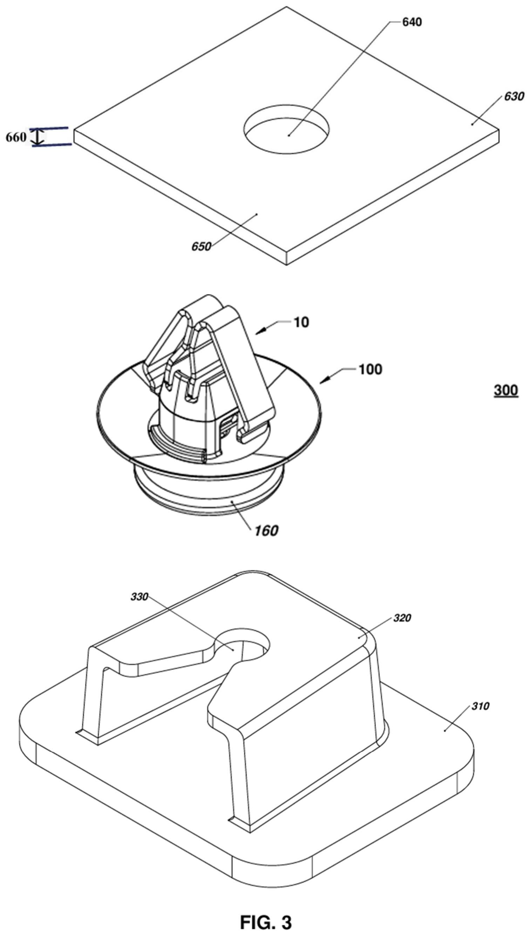

According to one embodiment, legs 30 are coupled at a head portion 250 away and opposite from the base plate 20, as shown in Fig. 3. For example, the lead in section 60 may provide a guide for inserting the fastener clip 10 into the slot 640 of the first engagement structure, such as a chassis 630, or roof during assembly.

Fig. 3 is a perspective view of a body panel assembly 300 according to another embodiment. The at least one first and second wing 40 has an engagement region 270 and a wing tip 50. According to one embodiment, the engagement region 270 includes a snap knuckle 70 formed on each wing 40, such that each snap knuckle 70 is operative to engage at least a portion of the slot 640 defined in the chassis 630 and is operable to adapt to variations or movement of slot 640. According to the embodiment shown, each of the pair of laterally offset legs 30 is coupled to the wings 40 at a head portion 250 (i.e. distal relative to and opposite the base plate 20). According to this embodiment, the wings 40 are tapered to extend outwardly toward the base plate 20. Alternatively, the wings 40 could be coupled at or near the base plate 20 extending toward the head portion 250.

According to one embodiment, legs 30 are coupled at a head portion 250 away and opposite from the base plate 20. For example, the head portion 250 and lead in section 60 may provide a guide for inserting the fastener clip 10 into the slot 640 of the chassis 630, such as a chassis roof, during assembly.

Figs. 2 -6 show more detail for the wing tip 50, engagement region 270 and the snap knuckle(s) 70 according to one embodiment. According to one embodiment, the snap knuckle(s) 70 may include a depression formed on wings 40. For example, the snap knuckle(s) 70 may be manufactured by stamping a step or ridge on wings 40 to form the depressed portion 70. The size, dimensions and shape of the snap knuckle(s) 70 may be formed in any suitable manner in order to permit relatively easy insertion of the fastener clip 10 into the chassis 630 while increasing the extraction force.

The snap knuckle(s) 70 may include, for example, an abrupt edge, a gradual angled edge such as a curve, a single angled edge, a discrete multi-angled edge and a pointed edge or any suitable edge. For example, the snap knuckle(s) 70 may be stamped, cut, molded, etched (i.e. chemical, laser, or knife etching for example) or formed in any suitable manner such that a protrusion, prong, edge, rounded, bulbous, stepped, angled, and depressed or other suitable shape is formed for example in a non-planar orientation relative to an end of the wings 40. The snap knuckle(s) 70 is formed on the engagement region 270 of each wing 40 so as to engage or "catch" slot 640 to increase an extraction force for the fastener clip 10 when removed from the slot 640 formed on the chassis 630. The snap knuckle(s) 70 and/or the engagement portion 50 may be sized to suitably engage slot rim 650 of the chassis 630 in order to obtain the desired level of extraction force.

During insertion, the engagement force between fastener clip 10 and chassis 630 may be, less than the extraction force. According to one exemplary embodiment, during insertion, the coupling force between fastener clip 10 and chassis 630 may be, for example, about 10, or 5 to 15 lbs. or any suitable insertion force, while the extraction force may be about 30, or 20 to 50 lbs. or any suitable extraction force. According to another exemplary embodiment, the insertion force is between 5 to 30 lbs. or less, while the extraction force may be about 200 to 400 lbs. or more. Any other suitable amount or range of insertion and extraction force for an appropriate application is contemplated. For example, the amount of insertion and extraction force for any application, large or small would require corresponding appropriate sized and characteristics of the engagement portion 50 described herein. In another application, such as in a visor mount, the extraction force may be over 100 lbs, such as 200, 300, even 400 lbs. or more. According to one embodiment, each of the wings 40 are formed with engagement portions 230 having different characteristics according to the different requirements for engagement of each wing 40.

According to one embodiment, any part of the snap knuckle 70 of the wing 40 engages the slot rim 650 formed by the slot 640 within the chassis 630. The snap knuckle 70 may further include characteristics such as a curve, and or an edge formed to include either a single curvature or multiple curvatures to engage the rim 650. The amount of curvature, the depth of the depression, the width of the depression and the number of depressions may be sized in order to provide the desired level of extraction force due to the frictional engagement between any portion of the snap knuckle(s) 70 and the rim 650 of the chassis 630.

According to one embodiment, the snap knuckle(s) 70 may also include protrusions, cuts, points, curves, prongs, ribs, teeth and/or steps or any other suitable structure at any suitable location to frictionally engage the chassis 630. For example, such structure may be formed on an edge of the snap knuckle(s) 70 for complementary engagement with the chassis 630. The snap knuckle(s) 70 may form edges of any angle or curvature, such as, for example, zero degrees, 30 degrees, 45 degrees, 60 degrees, 90 degrees, 145 degrees and so on. For example, any part of the snap knuckle(s) 70 may continuously and frictionally engage the rim 650 with sufficient springing force in order to compensate for and automatically adapt to both production tolerances within the slot 640 of the chassis 630, the body panel 310, the second engagement structure 40 and also to compensate for thermal expansion, vibrations and other environmental conditions over very long periods of time. For example, if the body panel assembly 10 is subject to vibrations, rattles or otherwise moves relative to the second engagement structure 40, the frictional engagement between the snap knuckle(s) 70 and the rim 650 may continuously move or change while maintaining frictional engagement either continuously or discretely, and thus adapt to and dampen or prevent any resulting movement. As a result, fastener clip 10 may reliably attach the second engagement structure 40 to the chassis 630 via a secure coupling over long periods of time and under varying conditions.

According to one embodiment, the snap knuckle(s) 70 includes a dimple or suitable depression formed by including a gap between one or more stampings so that the snap knuckle(s) 70 includes a dimple or lip for further increasing the frictional engagement with the chassis 630. Alternatively, the snap knuckle(s) 70 may include two or more consecutive or alternating curved depressions.

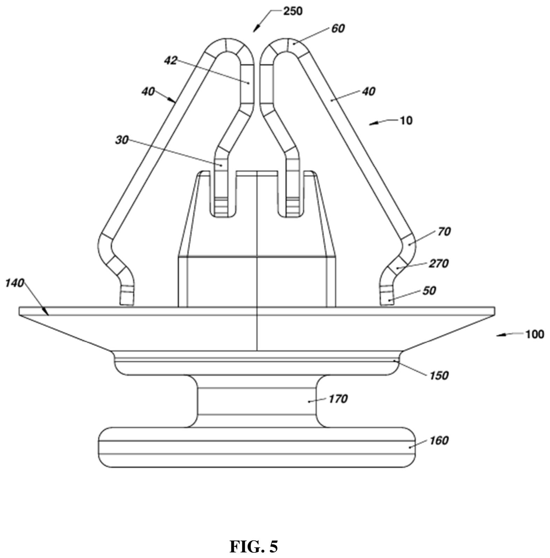

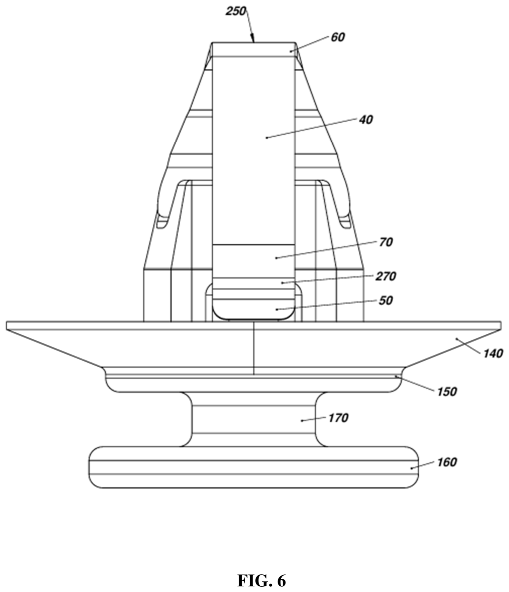

Figs. 5 and 6 are side views of the fastener clip 10. At least two locking tabs 400 protrude from the base plate 20, such that the at least two locking tabs 400 point away and oppose each other to engage locking slots 410 with a frictional opening. According to one embodiment, the fastener clip 10 further includes a side wing 210 to engage the interior or the carrier 100 for additional stability. According to one embodiment, the fastener clip 10 further includes a wing 40 to engage a edge of the slot 640 wherein the snap knuckle(s) 70 and optional engagement region(s) 270 on the first and second wings 40 engage a edge of the slot 640. For example, a relatively narrow engagement on a rectangular or oval slot or relatively wide engagement on a rectangular or oval slot.

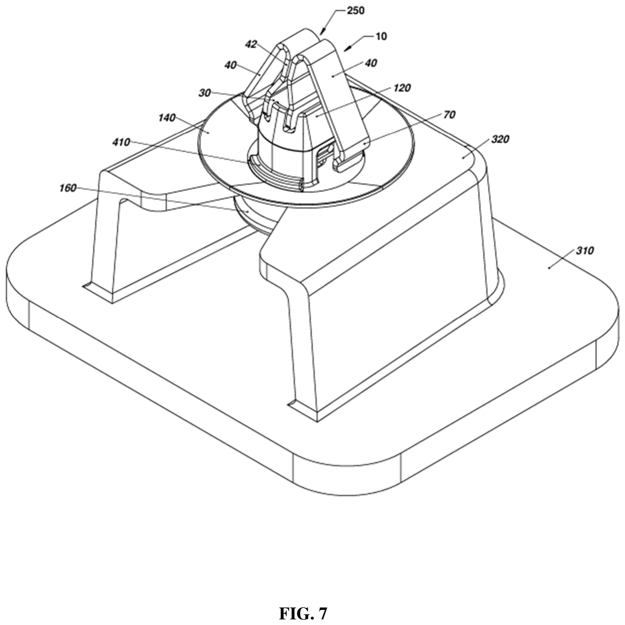

Figs. 3 and 7 are perspective views of a body panel assembly 300 according to one embodiment. The body panel assembly 300 comprises a body panel 310, such as a headliner and visor mounting assembly having a housing 320 and opening 330 to engage the fastener clip 10. The fastener clip 10 is operatively inserted into a slot 640 defined in a chassis 630, such as a vehicle chassis or frame. The fastener clip 10 optionally adapts to different thicknesses and curvatures of chassis 630 such that a distance between the engagement region(s) 270 and the base plate 20 is operative to vary continuously according to a slot 640 thicknesses.

According to one embodiment, the fastener clip 10 is made of: steel, tin aluminum, magnesium, copper, carbon fiber or any suitable metal or alloy. According to another embodiment, the carrier 100 is made of: plastic, acetal, polyacetal, polyoxymethylene, nylon, fiberglass, Acrylonitrile butadiene styrene (ABS), and/or carbon fiber, however any suitable material may be used in any combination such as steel, tin and/or any suitable metal. According to an alternative embodiment, a coating is applied on the fastener clip 10 made of at least one of: nickel plating, zinc plating, rubber, plastisol, plastic, acetal, polyacetal, polyoxymethylene, nylon, fiberglass and/or carbon fiber to suitably provide corrosion resistance and to reduce rattling.

The body panel 310, such as a visor bracket and headliner, may be constructed from plastic or from any suitable material such as wood, steel, aluminum, magnesium, wood, plastic, fiber glass, carbon fiber or any suitable material.

Figs. 7 - 11 are various views of a fastener clip 10 and body panel assembly 300 in accordance with other embodiments. According to one embodiment, at least one of the wings 40 may be removed such that the wing tips 50 functions as a removal tab. The wing tips 50 permit easy removal of the clip 10 by squeezing or compressing at least one of the wing tips 50 thus countering the expansion-spring force on the wings 40 and thus releasing the engagement regions 270 and snap knuckle(s) 70 from the slot 640.

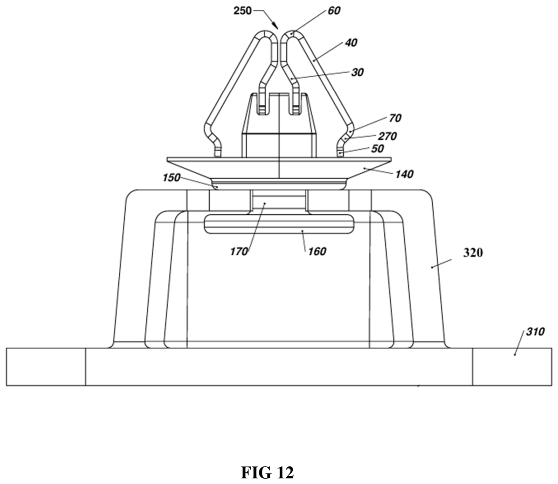

Fig. 12 is a side view of the fastener clip 10 prior to being affixed to a chassis 630 such as a chassis. The head portion 250 may provide a guide for inserting the fastener clip 10 into the slot 640 of the chassis 630, such as a roof or vehicle chassis, during assembly.

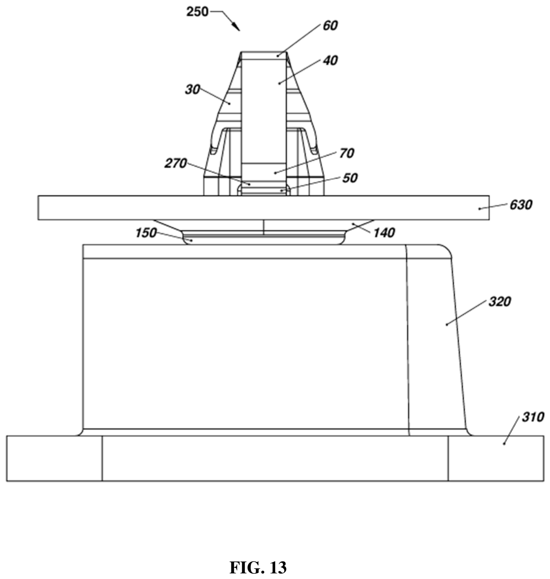

Fig. 13 is a side view of the fastener clip 10 affixed to the chassis 630 as shown in Fig. 12 rotated 90 degrees in accordance with an exemplary embodiment. The fastener clip 10 optionally adapts to different frame thicknesses 660 such that a distance between the snap knuckles 70 and the chassis 630 is operative to vary continuously according to a slot 640 thicknesses.

The body panel assembly 300 may be pre-assembled with fastener 10 and carrier 100 and delivered to an assembler of the body panel 310 such as a visor or headliner assembly. Thus, the assembler of the body panel assembly 300 to the vehicle simply attaches the body panel assembly 300 by pushing it into the chassis 630. Optionally, as described herein, the body panel assembly 300 may attach the visor or the headliner to form a headliner assembly ready for attachment to the roof during final vehicle assembly by pushing the body panel assembly 300 on the headliner into the roof.

Carrier 100 includes locking slots 410 to engage first locking tabs and second locking tabs "locking tabs 400" suitable to provide pressure between the carrier 100 and the fastener 10 to among other things reduce rattling. Locking slots 410 may be slots molded (with or without multiple step molding action) into the carrier 100 at a height suitable to provide a springing force against the fastener 10.

As a result, the fastener 10, the body panel assembly 300 may replace screws or other fasteners for fastening the body panels 310 such as a headliner and visor assembly to the roof to provide the requisite high level of extraction force while significantly reducing assembly and servicing time and cost.

According to one embodiment, a two piece mold is used, although any suitable number of molds may be used. Carrier 100 or any combination of components may be made from: Polypropylene, glass fill, acetal, plastic, vinyl, rubber, plastisol, plastic, acetal, polyacetal, polyoxymethylene, nylon, any suitable polymeric material, polycarbonate, thermoplastic resin, fiberglass and carbon fiber and Acrylonitrile butadiene styrene (ABS), or any suitable material and combination thereof suitable for injection molding.

It is understood that the implementation of other variations and modifications of the present invention in its various aspects will be apparent to those of ordinary skill in the art and that the invention is not limited by the specific embodiments described. It is therefore contemplated to cover by the present invention any and all modifications, variations or equivalents that fall within the spirit and scope of the basic underlying principles disclosed and claimed herein.

The hybrid plastic carrier 100 and metal fastener clip 10, comprises a base plate 20; a first leg 30 extending from the base plate 20; a first locking tab and a second locking tab "locking tab 400" formed on the first leg 30; at least one first wing 40 extending from the first leg 30 comprising: an engagement region(s) 270 on the first wing 40; and a first snap knuckle 70; a second leg 30 extending from the base plate 20 such that the first leg 30 and the second leg 30 bend away from each other to form a head portion 250 and a lead in section 60; a locking tab 400 formed on the second leg 30; at least one second wing 40 extending from the second leg 30 comprising: an engagement region(s) 270 on the second wing 40; and a second snap knuckle 70 opposing the first snap knuckle 70; a pair of opposing wing tips 50 at ends of the first and second wings 40 operable to engage a chassis slot 640; a plastic carrier 100 having an opening 110 for inserting the base plate 20; a pair of opposing carrier walls 120 formed on a top end 130 of the carrier 100 to bend as the opposing locking tabs 400 slide past the carrier 100 walls; and a pair of opposing locking slots 410 to engage the opposing locking tabs 400. The chassis slot 640 may be round, square, polygonal, or any other suitable shape.

The hybrid plastic carrier 100 and metal fastener clip 10, wherein the first and second snap knuckles 70 further include at least one of: a bend, a bent leg, an abrupt edge, a gradual angled edge, a curve, a single angled edge, a discrete multi-angled edge and a pointed edge.

The hybrid plastic carrier 100 and metal fastener clip 10, wherein the metal fastener clip 10 is formed by at least one of: stamping, cutting, molding, etching, casting, machining, forming, welding, embossing, punching, heat treating, bonding, electroplating, pressing, or any suitable fabrication method.

The hybrid plastic carrier 100 and metal fastener clip 10, wherein the first and second snap knuckles 70 include at least one of: a protrusion, prong, edge, rounded, bulbous, stepped, angled, dimple, and depression.

The hybrid plastic carrier 100 and metal fastener clip 10, wherein the carrier walls 120 bend relative to the first and second legs 30 and the opposing locking tabs 400, such that the opposing locking tabs 400 slide past the carrier 100walls to allow the opposing locking tabs 400 to engage the corresponding opposing locking slots 410.

The hybrid plastic carrier 100 and metal fastener clip 10, further comprising: a sealing flange 140 formed on the plastic carrier 100 at and end opposite from the top end 130; a seal support disc 150 to support the sealing flange 140; a base disc 160 operable to releasably detach from a corresponding housing 320 on a body panel 310; and a post 170 between the base disc 160 and the seal support disc 150 to provide suitable spacing.

The hybrid plastic carrier 100 and metal fastener clip 10 wherein the carrier 100 further comprises a carrier bottom floor 450 to engage the base plate 20 such that when the pair of opposing locking tabs 400 engage the opposing locking slots 410, the base plate 20 is in compression with the carrier bottom floor 450.

The hybrid plastic carrier 100 and metal fastener clip 10, wherein the head portion 250 and the lead in section 60 are operably inserted into a chassis slot 640 such that the opposing snap knuckles 70 slide through the chassis slot 640 and snap outwardly and the opposing wing tips 50 engage the chassis slot 640.

The hybrid plastic carrier 100 and metal fastener clip 10, wherein the pair of opposing wing tips 50 have a curvature matching a curvature of the chassis slot 640.

The hybrid plastic carrier 100 and metal fastener clip 10, wherein an engagement force is less than an extraction force.

The hybrid plastic carrier 100 and metal fastener clip 10, wherein the plastic carrier 100 is made of at least one of: rubber, plastisol, plastic, acetal, polyacetal, polyoxymethylene, nylon, fiberglass, carbon fiber, polyethylene, polycarbonate, acrylic, neoprene, silicone, polyurethane, thermoplastic elastomers, or any suitable material.

The hybrid plastic carrier 100 and metal fastener clip 10, wherein the engagement region(s) 270 includes at least one of: a protrusion, prong, edge, rounded, bulbous, stepped, angled, dimple, and depression.

A hybrid plastic carrier 100 and metal fastener clip 10 assembly comprising: a body panel 310 comprising a housing 320; a metal fastener clip comprising: a base plate; a first leg 30 extending from the base plate; a locking tab 400 formed on the first leg; at least one first wing 40 extending from the first leg 30 comprising: an engagement region(s) 270 on the first wing 40; and a first snap knuckle 70; a second leg 30 extending from the base plate 20 such that the first leg 30 and the second leg 30 bend away from each other to form a head portion 250 and a lead in section 60; a locking tab 400 formed on the second leg; at least one second wing 40 extending from the second leg 30 comprising: an engagement region(s) 270 on the second wing 40; and a second snap knuckle opposing the first snap knuckle; a pair of opposing wing tips 50 at ends of the first and second wing 40 operable to engage a chassis slot 640; a plastic carrier 100 having an opening for inserting the base plate 20 and a pair of discs (seal support disc 150, base disc 160) at an opposite end for snapping into the housing 320; a pair of opposing carrier walls 120 formed on a top end 130 of the carrier 100 to bend as the opposing locking tabs 400 slide past the carrier 100 walls; and a pair of opposing locking slots 410 to engage the opposing locking tabs 400.

The hybrid plastic carrier 100and metal fastener clip 10 assembly, wherein the carrier 100walls bend relative to the first and second legs 30 and the opposing locking tabs 400, such that the opposing locking tabs 400 slide past the carrier walls 120 to allow the opposing locking tabs 400 to engage the opposing locking slots 410.

The hybrid plastic carrier 100 and metal fastener clip 10 assembly, wherein the carrier 100 further comprises a carrier bottom floor 450 to engage the base plate 20 such that when the pair of opposing locking tabs 400 engage the opposing locking slots 410, the base plate 20 is in compression with the carrier bottom floor 450.

The hybrid plastic carrier 100 and metal fastener clip 10 assembly wherein the head portion 250 and the lead in section 60 are operably inserted into a round chassis slot 640 such that the opposing snap knuckles 70 slide through the chassis slot 640 and snap outwardly and the opposing wing tips 50 engage the chassis slot 640.

The hybrid plastic carrier 100and metal fastener clip 10 assembly wherein the metal fastener clip is formed by at least one of: stamping, cutting, molding, etching, casting, machining, forming, welding, embossing, punching, heat treating, bonding, electroplating, pressing, or any suitable fabrication method.

Clause 18. The hybrid plastic carrier 100 and metal fastener clip 10 assembly further comprising: a sealing flange 140 formed on the plastic carrier 100 at and end opposite from the top end 130; a seal support disc 150 to support the sealing flange 140; a base disc 160 operable to releasably detach from a corresponding housing 320 on a body panel 310; and a post 170 between the base disc 160 and the seal support disc 150 to provide suitable spacing.

The hybrid plastic carrier 100 and metal fastener clip 10 assembly, wherein the plastic carrier 100 is made of at least one of: rubber, plastisol, plastic, acetal, polyacetal, polyoxymethylene, nylon, fiberglass, carbon fiber, polyethylene, polycarbonate, acrylic, neoprene, silicone, polyurethane, thermoplastic elastomers, or any suitable material.

The hybrid plastic carrier 100 and metal fastener clip 10 assembly, wherein an engagement force is less than an extraction force.

A vehicle comprising: a vehicle chassis having a slot; a body panel 310 comprising a housing 320; a metal fastener clip comprising: a base plate 20; a first leg 30 extending from the base plate 20; a locking tab 400 formed on the first leg; at least one first wing 40 extending from the first leg 30 comprising: an engagement region(s) 270 on the first wing 40; and a first snap knuckle; a second leg 30 extending from the base plate 20 such that the first leg 30 and the second leg 30 bend away from each other to form a head portion 250 and a lead in section 60; a locking tab 400 formed on the second leg 30; at least one second wing 40 extending from the second leg 30 comprising: an engagement region(s) 270 on the second wing 40; and a second snap knuckle opposing the first snap knuckle 70; a pair of opposing wing tips 50 at ends of the first and second wing 40 operable to engage the chassis slot 640; a plastic carrier 100 having an opening for inserting the base plate 20 and a pair of discs at an opposite end for snapping into the housing 320; a pair of opposing carrier walls 120 formed on a top end 130 of the carrier 100 to bend as the opposing locking tabs 400 slide past the carrier walls 120; and a pair of opposing locking slots 410 to engage the opposing locking tabs 400.

The vehicle of clause 21, wherein the carrier 100 walls bend relative to the first and second legs 30 and the opposing locking tabs 400, such that the opposing locking tabs 400 slide past the carrier 100walls to allow the opposing locking tabs 400 to engage the opposing locking slots 410.

The vehicle, wherein the carrier 100 further comprises a carrier bottom floor 450 to engage the base plate 20 such that when the pair of opposing locking tabs 400 engage the opposing locking slots 410 the base plate 20 is in compression with the carrier bottom floor 450.

The vehicle further comprising: a sealing flange 140 formed on the plastic carrier 100 at and end opposite form the opening; a seal support disc 150 to support the sealing flange 140; a base disc 160 operable to releasably detach from the housing 320 on the body panel 310; and a post 170 between the base disc 160 and the seal support disc 150 to provide suitable spacing.

## Claims

1. A hybrid plastic carrier and metal fastener clip, comprising:
a metal fastener clip comprising:
a base plate;
a first leg extending from the base plate;
a first locking tab formed on the first leg;
at least one first wing extending from the first leg comprising:
a first engagement region on the at least one first wing; and
a first snap knuckle;
a second leg extending from the base plate such that the first leg and the second leg bend away from each other to form a head portion and a lead in section;
a second locking tab formed on the second leg;
at least one second wing extending from the second leg comprising:
a second engagement region on the at least one second wing; and
a second snap knuckle opposing the first snap knuckle; and
a pair of opposing wing tips at ends of the at least one first wing and the at least one second wing operable to engage a chassis slot; and
a plastic carrier having an opening for inserting the base plate;
a pair of opposing carrier walls formed on a top end of the plastic carrier to bend as the first locking tab and the second locking tab slide past the pair of opposing carrier walls; and
a pair of opposing locking slots to engage the first locking tab and the second locking tab.

2. The hybrid plastic carrier and metal fastener clip of claim 1, wherein the first snap knuckle and the second snap knuckle further include at least one of: a bend, a bent leg, an abrupt edge, a gradual angled edge, a curve, a single angled edge, a discrete multi-angled edge, and a pointed edge.

3. The hybrid plastic carrier and metal fastener clip of claim 1, wherein the metal fastener clip is formed by at least one of: stamping, cutting, molding, etching, stamping, cutting, molding, etching, casting, machining, forming, welding, embossing, punching, heat treating, bonding, electroplating, and pressing.

4. The hybrid plastic carrier and metal fastener clip of claim 1, wherein the first snap knuckle and the second snap knuckle include at least one of: a protrusion, prong, edge, rounded, bulbous, stepped, angled, dimple, and depression.

5. The hybrid plastic carrier and metal fastener clip of claim 1, wherein:
the pair of opposing carrier walls bend relative to the first leg and the second leg and the first locking tab and the second locking tab, and
such that the first locking tab and the second locking tab slide past the pair of opposing carrier walls to allow the first locking tab and the second locking tab to correspondingly engage the pair of opposing locking slots.

6. The hybrid plastic carrier and metal fastener clip of claim 1, further comprising:
a sealing flange formed on the plastic carrier;
a seal support disc to support the sealing flange;
a base disc operable to releasably detach from a corresponding housing on a body panel; and
a post between the base disc and the seal support disc to provide spacing.

7. The hybrid plastic carrier and metal fastener clip of claim 1 wherein the plastic carrier further comprises:
a carrier bottom floor to engage the base plate such that when the first locking tab and the second locking tab engage the pair of opposing locking slots, the base plate is in compression with the carrier bottom floor.

8. The hybrid plastic carrier and metal fastener clip of claim 1, wherein the head portion and the lead in section are operably inserted into the chassis slot such that the first snap knuckle and the second snap knuckle slide through the chassis slot and snap outwardly and the pair of opposing wing tips engage the chassis slot.

9. The hybrid plastic carrier and metal fastener clip of claim 1, wherein the pair of opposing wing tips have a curvature matching a curvature of the chassis slot.

10. The hybrid plastic carrier and metal fastener clip of claim 1, wherein an engagement force is less than an extraction force.

11. The hybrid plastic carrier and metal fastener clip of claim 1, wherein the plastic carrier is made of at least one of: rubber, plastisol, plastic, acetal, polyacetal, polyoxymethylene, nylon, fiberglass, carbon fiber, polyethylene, polycarbonate, acrylic, neoprene, silicone, polyurethane, thermoplastic elastomers.

12. The hybrid plastic carrier and metal fastener clip of claim 1, wherein the first engagement region and the second engagement region includes at least one of: a protrusion, prong, edge, rounded, bulbous, stepped, angled, dimple, and depression.

13. A hybrid plastic carrier and metal fastener clip assembly comprising:
a body panel comprising a housing;
a metal fastener clip comprising:
a base plate;
a first leg extending from the base plate;
a first locking tab formed on the first leg;
at least one first wing extending from the first leg comprising:
a first engagement region on the at least one first wing; and
a first snap knuckle;
a second leg extending from the base plate such that the first leg and the second leg bend away from each other to form a head portion and a lead in section;
a second locking tab formed on the second leg;
at least one second wing extending from the second leg comprising:
a second engagement region on the at least one second wing; and
a second snap knuckle opposing the first snap knuckle; and
a pair of opposing wing tips at ends of the least one first wing and the least one second wing operable to engage a chassis slot;
a plastic carrier having an opening for inserting the base plate; and
a pair of discs at an opposite end for snapping into the housing;
a pair of opposing carrier walls formed on a top end of the plastic carrier to bend as the first locking tab and the second locking tab slide past the pair of opposing carrier walls; and
a pair of opposing locking slots to engage the first locking tab and the second locking tab.

14. The hybrid plastic carrier and metal fastener clip assembly of claim 13, wherein the pair of opposing carrier walls bend relative to the first leg and second leg and the first locking tab and the second locking tab, such that the first locking tab and the second locking tab slide past the pair of opposing carrier walls to allow the first locking tab and the second locking tab to engage the pair of opposing locking slots.

15. The hybrid plastic carrier and metal fastener clip assembly of claim 13, wherein the plastic carrier further comprises:
a carrier bottom floor to engage the base plate such that when the first locking tab and the second locking tab engage the opposing locking slots, the base plate is in compression with the carrier bottom floor.

16. The hybrid plastic carrier and metal fastener clip assembly of claim 13 wherein the head portion and the lead in section are operably inserted into the chassis slot such that the first snap knuckle and the second snap knuckle slide through the chassis slot and snap outwardly and the pair of opposing wing tips engage the chassis slot.

17. The hybrid plastic carrier and metal fastener clip assembly of claim 13 wherein the metal fastener clip is formed by at least one of: stamping, cutting, molding, etching, casting, machining, forming, welding, embossing, punching, heat treating, bonding, electroplating, and pressing.

18. The hybrid plastic carrier and metal fastener clip assembly of claim 13 further comprising:
a sealing flange formed on the plastic carrier at and end opposite from the top end;
a seal support disc to support the sealing flange;
a base disc operable to releasably detach from a corresponding housing on the body panel; and
a post between the base disc and the seal support disc to provide spacing.

19. The hybrid plastic carrier and metal fastener clip assembly of claim 13, wherein the plastic carrier is made of at least one of: rubber, plastisol, plastic, acetal, polyacetal, polyoxymethylene, nylon, fiberglass and carbon fiber.

20. The hybrid plastic carrier and metal fastener clip assembly of claim 13, wherein an engagement force is less than an extraction force.

21. A vehicle comprising:
a vehicle chassis having a slot;
a body panel comprising a housing; and
a metal fastener clip comprising:
a base plate;
a first leg extending from the base plate;
a first locking tab formed on the first leg;
at least one first wing extending from the first leg comprising:
a first engagement region on the least one first wing; and
a first snap knuckle;
a second leg extending from the base plate such that the first leg and the second leg bend away from each other to form a head portion and a lead in section;
a second locking tab formed on the second leg;
at least one second wing extending from the second leg comprising:
a second engagement region on the at least one second wing; and
a second snap knuckle opposing the first snap knuckle;
a pair of opposing wing tips at ends of the least one first wing and the least one second wing operable to engage the slot;
a plastic carrier having an opening for inserting the base plate;
a pair of discs at an opposite end for snapping into the housing;
a pair of opposing carrier walls formed on a top end of the plastic carrier to bend as the first locking tab and the second locking tab slide past the pair of opposing carrier walls; and
a pair of opposing locking slots to engage the first locking tab and the second locking tab.

22. The vehicle of claim 21, wherein the pair of opposing carrier walls bend relative to the first leg and the second leg and the first locking tab and the second locking tab, such that the first locking tab and the second locking tab slide past the pair of opposing carrier walls to allow the first locking tab and the second locking tab to engage the opposing locking slots.

23. The vehicle of claim 21, wherein the plastic carrier further comprises:
a carrier bottom floor to engage the base plate such that when the first locking tab and the second locking tab engage the opposing locking slots the base plate is in compression with the carrier bottom floor.

24. The vehicle of claim 21 further comprising:
a sealing flange formed on the plastic carrier at and end opposite from the opening;
a seal support disc to support the sealing flange;
a base disc operable to releasably detach from the housing on the body panel; and
a post between the base disc and the seal support disc to provide spacing.
